# EUROPEAN PATENT APPLICATION

(11) **EP 0 639 540 A1**
(43) Date of publication of application: **22.02.1995**
(21) Application number: 94107326.4
(22) Date of filing: 11.05.1994
(51) Int. Cl.: C04B 35/00, B22F 3/16, B22F 3/22

(54) **A process for manufacturing metal and/or ceramic sheets, by means of powder sintering, and related products**

(30) Priority: 16.07.1993 IT TO930535
(71) Applicant: FIAT AUTO S.p.A., I-10135 Torino (IT)
(72) Inventor: Da Re', Mario, I-10100 Torino (IT)
(74) Representative: Di Francesco, Gianni

(57) **Abstract**

A process for manufacturing metal and/or ceramic sheets obtained by powder sintering is described, comprising the following successive stages:
a) preparation of at least one compound of metal and/or ceramic powders;
b) extrusion of the compound to the required section and length;
c) thermoforming of the extruded material by direct compression;
d) pyrolysis of the thermoformed article thus eliminating substantially the polymer content and obtaining a semi-finished metal and/or ceramic sintered product.

## Description

This invention refers to a process for manufacturing metal and/or ceramic sheets by means of powder sintering, as well as the related products.

At present there is a well known "injection molding" technique, which consists of the preparation of a very fine granular compound (10-20 microns) made of metal (in particular iron) or ceramic powders associated with polymers or special waxes. The compound is molded in very complex shapes with extremely thin finished product thicknesses. Once molding has been carried out, successive pyrolysis operations cause the elimination of the polymer with the consequent autosintering of the metal or ceramic powder and a reduction in the initial volume proportional to the percentage of polymer present in said powder. The product thus obtained is of great interest in the mechanical field.

The molding technique, notwithstanding the fact that it produces parts with an excellent finish, has however a disadvantage which arises when parts with a particularly complicated section or geometric shape need to be produced. In this case, the molding of several individual and complementary parts, which are then welded together, is required. It is also well known that, in order to obtain finished parts with a certain structural complexity, it is simpler and it requires less work to manufacture a sheet of the required material by extrusion, to fold it in a proper shape and then to machine it according to requirements, rather than to weld together finished pieces obtained by molding.

In order to obtain large machinable parts it is preferable to use extrusion, but some widely used industrial materials are difficult to obtain in sheet form. This is the case with magnesium and titanium. Magnesium because it has a crystalline structure which hinders any attempt at rolling; titanium because its cost makes it unsuitable to be manufactured into sheets on an industrial scale.

The aim of this invention is to propose a process which will overcome the above mentioned disadvantages, thus allowing the manufacturing of a part obtained from a single sheet manufactured through the extrusion of a compound of any ceramic or metal powder associated with polymers, and also the manufacturing of a sheet obtained by coextrusion of a ceramic/polymers compound with a metal/polymers compound.

For this and other aims and advantages, which will become clear from the following description, this invention proposes a process for manufacturing metal and/or ceramic sheets obtained by powder sintering, characterized in that there are the following successive stages:
a) preparation of at least one compound made of metal and/or ceramic powders associated with polymers;
b) extrusion of the compound to the required section and length;
c) thermoforming of the extruded material by direct compression;
d) pyrolysis of the thermoformed article thus substantially eliminating the polymer content and obtaining a semi-finished metal and/or ceramic sintered product.

A preferred, but not restrictive, embodiment according to the present invention will now be described; the enclosed drawings show, by way of example, a semifinished product obtained through the process according to this invention at some possible successive manufacturing stages.

The initial stage of the process according to the invention consists of the preparation of a plastic like compound of metal and/or ceramic powders associated with polymers.

This compound, instead of being injected into a mold, is extruded into sheets which are then thermoformed by direct compression, after exposure to a suitable thermal load. During this stage the thermoforming process allows the compound to reach the polymer melting temperature.

The semifinished product thus obtained undergoes an elution or washing treatment in order to reduce the quantity of binder present in the part.

Then the part undergoes a pyrolysis process, combined or not (according to requirements) with a suitable pressure in an autoclave. The pyrolysis requires preferably an initial thermal load of 200-300° C for four hours, and a subsequent thermal load of 8 hours at a temperature between 400° C and 1800° c. The pyrolysis has the effect of eliminating the polymer content from the semifinished product, thus leaving a sintered ceramic or metal article ready to undergo further possible operations.

The process of this invention, if compared to traditional molding techniques, gives particularly advantageous results if aimed at manufacturing of complex shape elements, with large surface development and a small thickness (to a minimum of 0.5-1 mm ), examples of which are external motor vehicle panels or multi-functional structural components.

With reference to the figures, a semifinished part 10 in the sheet form (fig. 1) obtained through the process of this invention is first folded into a C-shape along two parallel lines (fig. 2), then an arched deformation is obtained, again by folding, in the middle section (fig.3) and so on until through successive cuts and folds, the sheet assumes its required shape.

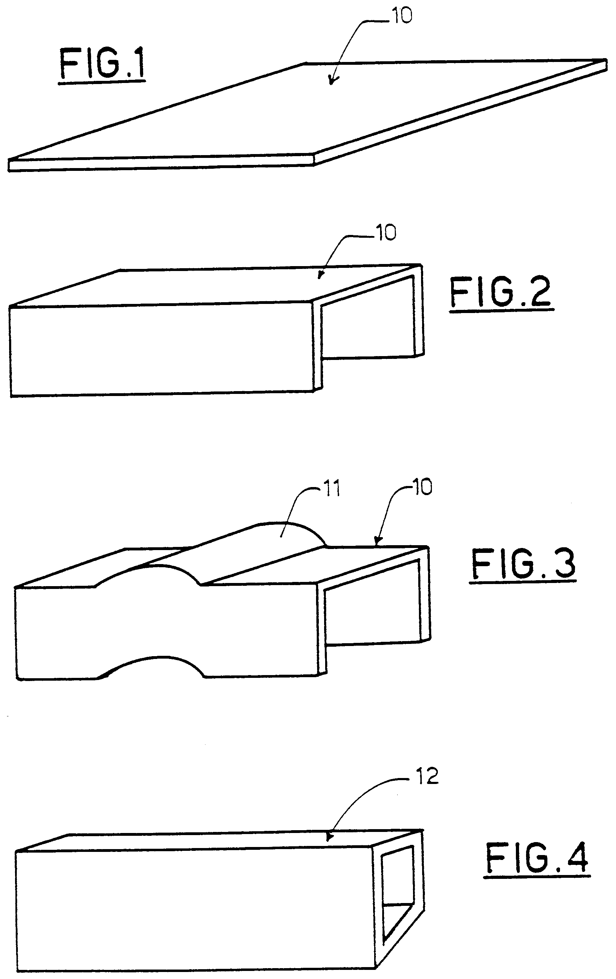

In fig. 4 a semifinished tubular part is shown, obtained directly through the present process, since it is possible to force the compound of metallic and ceramic powders and of polymers through the most slits of the most varied form, according to need, in order to obtain, by extrusion, semifinished parts in the form of tubes, rods and section bars as well as sheets.

Regarding the most suitable metals to be used in making the compound to be extruded, one of the most common metal powders is iron powder, though powders of other metals such as titanium, magnesium etc. can be used.

The polymers to be added to the metallic powders might be, for example, olefine wax, vinyl wax, polyolefine and/or polyamide polymers.

The values of the direct compression, which are applied to the the semifinished part during the thermoforming stage, must be dependent on the percentage of polymer in the compound: for higher percentages of polymer a higher compression value must be applied. For example, for a compound containing 5% polymer and 95% iron powder, the compression value will be around 100Kg/cm2, while for a compound made of 20% polymer and of 80% iron, the compression value must rise to a value of around 150Kg/cm2.

As stated, the polymer powder can be mixed with a metal or ceramic powder thus obtaining, through the extrusion, two products of evidently different characteristics; however, the process according to the present invention also provides the possibility of obtaining one single product starting from two compounds, one made of ceramic powders and polymers, and the other made of metal powders and polymers, which are then coextruded in such a way that a product is manufactured in which the metal and the ceramics are combined to obtain the characteristics and the advantages of both materials.

Obviously in this product the mutual position of the metal and the ceramic compounds can be inverted (internal, external) depending on how the coextrusion is carried out.

In fact a "sandwich" product can be obtained in which various layers of ceramics and metal are interposed.

This invention is not limited to the examples shown and described here, which are to be considered as examples of embodiments of the process which can instead be modified depending on the materials chosen and on the temperature and compression values and their respective application times. This invention is instead intended to embrace all the variants in its field as defined in the following claims.

## Claims

1. A process for manufacturing metal and/or ceramic sheets obtained by powder sintering characterized in that there are the following successive stages:
a) preparation of at least one compound made of metal and/or ceramic powders associated with polymers;
b) extrusion of the compound to the required section and length;
c) thermoforming of the extruded material by direct compression;
d) pyrolysis of the thermoformed article thus substantially eliminating the polymer content and obtaining a semi-finished metal and/or ceramic sintered product.

2. A process according to claim 1, characterized in that between stages (c) and (d) the product undergoes an elution or washing treatment.

3. A process according to claim 1, characterized in that stage (d) provides for the application of two successive thermal loads.

4. A process according to claim 1, characterized in that during stage (c) the applied compression value is substantially proportional to the percentage of polymer present in the extruded material.

5. A process according to claim 1, characterized in that there are at least two compounds, one consisting of metal powders associated with polymers and the other consisting of ceramic powders associated with polymers, the two compounds being coextruded in order to obtain a combination of the metal and ceramic materials.

6. A metal and/or ceramic sheet obtained by powder sintering by means of the process disclosed in the previous claims.
